(19) Europäisches Patentamt
European Patent Office
Office européen des brevets

(11) EP 3 799 282 A1

(12) EUROPÄISCHE PATENTANMELDUNG

(43) Veröffentlichungstag:
31.03.2021 Patentblatt 2021/13

(51) Int Cl.:
**H02M 1/15** (2006.01)

(21) Anmeldenummer: 19200073.5

(22) Anmeldetag: 27.09.2019

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Köllensperger, Peter**
**90425 Nürnberg (DE)**
• **Neugebauer, Stephan**
**91058 Erlangen (DE)**

(54) **STROMRICHTER MIT AKTIVER DÄMPFUNG DER ZWISCHENKREISSPANNUNG**

(57) Die Erfindung betrifft ein Verfahren zum Betreiben eines steuerbaren Stromrichters (1) mit einem Zwischenkreiskondensator (2). Zur Verbesserung des steuerbaren Stromrichters (1), insbesondere im Hinblick auf sein Regelverhalten, wird vorgeschlagen, dass in Abhängigkeit einer am Zwischenkreiskondensator (2) anliegenden Zwischenkreisspannung ($U_{ZK}$) ein zusätzlicher Leistungsanteil ($P_{add}$) über den steuerbaren Stromrichter (1) derart übertragen wird, dass der für den zusätzlich Leistungsanteil entstehende elektrische Strom durch den steuerbaren Stromrichter (1) einer Schwingung der Zwischenkreisspannung ($U_{ZK}$) entgegenwirkt. Ferner betrifft die Erfindung einen steuerbaren Stromrichter (1) mit einer Regelungseinheit zur Durchführung eines derartigen Verfahrens, wobei der steuerbare Stromrichter (1) abschaltbare Halbleiter und einen Zwischenkreiskondensator (2) aufweist, wobei der Zwischenkreiskondensator (2) als Folienkondensator ausgebildet ist.

FIG 1

EP 3 799 282 A1

**Beschreibung**

Die Erfindung betrifft ein Verfahren zum Betreiben eines steuerbaren Stromrichters mit einem Zwischenkreiskondensator. Ferner betrifft die Erfindung einen steuerbaren Stromrichter mit einer Regelungseinheit zur Durchführung eines derartigen Verfahrens, wobei der steuerbare Stromrichter abschaltbare Halbleiter und einen Zwischenkreiskondensator aufweist.

Ein steuerbarer Stromrichter mit einem Zwischenkreiskondensator dient dazu, eine Gleichspannung am Eingang des Stromrichters, die am Zwischenkreis und damit auch am Zwischenkreiskondensator anliegt, in eine Wechselspannung mit einer Vorgebbaren Amplitude und einer vorgebbaren Frequenz umzuwandeln. Dazu verwendet der steuerbare Stromrichter schaltbare, insbesondere abschaltbare, Halbleiter.

Am Zwischenkreiskondensator liegt dabei im Wesentlichen eine Gleichspannung an. Dieser Gleichspannung kann allerdings, beispielsweise durch eine unsymmetrische Last oder durch ein unsymmetrisches Energieversorgungsnetz eine Wechselspannung überlagert sein. Diese Wechselspannung ist gerade dann störend, wenn damit Resonanzen angeregt werden, da es dann zu einer unzulässigen Belastung von Komponenten kommen kann oder die Regelung des Stromrichters gestört wird. Beides kann zu einer Zerstörung von Komponenten oder zu einem Fehlverhalten im Betrieb des Stromrichters oder einer damit aufgebauten Anlage wie beispielsweise einem Antriebssystem führen.

Im Gegensatz zu einem steuerbaren Stromrichter gibt es auch ungesteuerte Stromrichter wie beispielsweise eine B2 oder B6 Diodenbrücke, die ohne Steuerung oder Regelung eine Wechselspannung in eine Gleichspannung umwandeln können.

Der Erfindung liegt die Aufgabe zugrunde, einen steuerbaren Stromrichter insbesondere hinsichtlich seines Betriebsverhaltens, zu verbessern.

Diese Aufgabe wird durch ein Verfahren zum Betreiben eines steuerbaren Stromrichters mit einem Zwischenkreiskondensator, wobei in Abhängigkeit einer am Zwischenkreiskondensator anliegenden Zwischenkreisspannung ein zusätzlicher Leistungsanteil über den steuerbaren Stromrichter derart übertragen wird, dass der für den zusätzlich Leistungsanteil entstehende elektrische Strom durch den steuerbaren Stromrichter einer Schwingung der Zwischenkreisspannung entgegenwirkt. Die Aufgabe wird weiter durch einen steuerbaren Stromrichter mit einer Regelungseinheit eingerichtet zur Durchführung eines derartigen Verfahrens gelöst, wobei der steuerbare Stromrichter abschaltbare Halbleiter und einen Zwischenkreiskondensator aufweist, wobei der Zwischenkreiskondensator als Folienkondensator ausgebildet ist.

Weitere vorteilhafte Ausgestaltungen der Erfindung sind in den abhängigen Ansprüchen angegeben.

Der Erfindung liegt die Erkenntnis zugrunde, dass sich der Betrieb eines Stromrichters verbessern lässt, indem Schwingungen im Zwischenkreis des Stromrichters dadurch beseitigt werden, dass ein zusätzlicher Leistungsanteil über den Stromrichter übertragen wird, der dem Schwingen der Zwischenkreisspannung entgegenwirkt. Diese Schwingungen können sich beispielsweise aufgrund von Resonanzstellen ergeben, die beispielsweise durch den Betrieb des Stromrichters angeregt werden. Üblicherweise werden die Resonanzstellen mit Hilfe von Widerständen bedämpft, um zu große Spannungsschwankungen zu verhindert. Diese Widerstände erhöhen allerdings die Verluste des Stromrichters. Die Widerstände können beispielsweise durch parasitäre ohmsche Verluste des Zwischenkreiskondensators in das System eingebracht werden. Durch die Verwendung des erfindungsgemäßen Verfahrens kann dann die Dämpfung im Stromrichter reduziert werden und damit reduzieren sich die Verluste des Stromrichters. Durch den höheren Wirkungsgrad wird der Betrieb des Stromrichters günstiger.

Durch den zusätzlich Leistungsanteil, der über den Stromrichter übertragen wird, entsteht ein Strom im Zwischenkreis des Stromrichters. Dieser Strom, multipliziert mit der Zwischenkreisspannung ergibt die zusätzlich Augenblicksleistung, die über den Stromrichter übertragen wird. Diese zusätzliche Augenblicksleistung wird als zusätzlicher Leistungsanteil bezeichnet. Er wird so gewählt, dass der entstehende Strom über die bekannte Beziehung am Kondensator

$$i = C \cdot \dot{u}$$

der Schwankung der Kondensatorspannung entgegenwirkt. Somit wird durch die Halbleiter des Stromrichters als ein aktives Element zur Dämpfung durch Einprägen einer entsprechenden Augenblicksleistung entgegengewirkt. Ein passives, und damit in seiner Flexibilität starres Element, wie beispielsweise ein Widerstand oder widerstandsbehaftete Schienenelement, ist nicht erforderlich.

Eine konstante Gleichspannung am Zwischenkreis ist wichtig für eine gute Regelung/Steuerung des Stromrichters. Schwingungen in der Zwischenkreisspannung führen oftmals zu einem nur ungenauen Regelverhalten des Stromrichters. Sollwerte wie Spannung, Frequenz an den wechselspannungsseitigen Anschlüssen des Stromrichters sowie Moment oder Drehzahl eines am Stromrichter angeschlossenen Motors können dann nicht mehr exakt eingehalten werden. Somit können durch das erfindungsgemäße Verfahren Sollwerte an dem Stromrichter oder an Komponenten, die am Stromrichter angeschlossen sind, wie beispielsweise ein Motor oder ein Energieversorgungsnetz, genau als Istwerte eingehalten werden. Es kommt nur zu einer geringen Regelabweichung.

Darüber hinaus hat das erfindungsgemäße Verfahren den Vorteil, dass es einfach auf die jeweiligen Einsatzbedingungen anpassbar ist. Die Anpassung, beispielsweise aufgrund der vorhandenen Resonanzfrequenz, kann auf einfache Weise in der Regelungssoftware erfolgen. Hardwareänderungen sind nicht erforderlich. Somit kann der Stromrichter einfach und kostengünstig an seine technische Umgebung angepasst werden. Eine Anpassung an andere Kombinationen/Ausführungen von Leistungsteilen der Stromrichter ist entweder nicht oder nur per Software-Parametrierung nötig. Bei passiven Elementen wie beispielsweise Widerständen oder einer widerstandsbehafteten Stromschiene muss immer eine individuelle Auslegung erfolgen, welche das technische Umfeld berücksichtigt. Darüber hinaus bietet dieses softwarebasierte Verfahren die Möglichkeit der dynamischen Anpassung an variierende Netzverhältnisse (Impedanzen bei Motor und/oder Energieversorgungsnetz).

Mit anderen Worten besteht der Vorteil des Verfahrens darin, dass zur Dämpfung einer Zwischenkreis-Spannungsschwingung ein aktives Konzept eingesetzt wird. Die grundlegende Idee ist es dabei, basierend auf einer Ermittlung der Zwischenkreisspannung Resonanzschwingungen zu identifizieren und mit Hilfe eines geeigneten Zusatzmomentes die Energie aus dem Zwischenkreis abzuführen.

Bei einer vorteilhaften Ausgestaltung der Erfindung ist der Zwischenkreiskondensator als Folienkondensator ausgebildet. Durch das erfindungsgemäße Verfahren ist es möglich, Resonanzerscheinungen besser entgegentreten zu können und gleichzeitig eine stabile und zuverlässige Regelung des Stromrichters implementieren zu können. Die Resonanzstellen bedürfen dadurch eine deutlich geringere Dämpfung mittels eines passiven Bauelementes wir beispielsweise einem Widerstand. Daher können für einen Stromrichter mit einer derartigen Regelung auch ein Folienkondensator im Zwischenkreis zum Einsatz kommen. Dieser Folienkondensator weist im Gegensatz zu dem heute vielfach verwendeten Elektrolytkondensator einen deutlich geringeren parasitären Widerstand auf. Der Widerstand, auch als ESR bezeichnet, weist dabei bei einem Folienkondensator mit einer Kapazität von 1mF einen Wert von $1m\Omega$ bis $1{,}5m\Omega$ auf. Somit beträgt der ESR eines Zwischenkreiskondensators, der aus einer Parallelschaltung von mehreren Folienkondensatoren aufgebaut ist, bei einer Kapazität von 20mF in etwa $50\mu\Omega$ bis $75\mu\Omega$. Diese Werte sind jeweils auf Anwendungen in der Niederspannung (<1000V) bezogen. Negative Auswirkungen wie Spannungsschwankungen oder Beschädigungen/Zerstörungen von Komponenten aufgrund der dann weitaus weniger gedämpften Resonanzstellen können mit dem erfindungsgemäßen Verfahren verhindert werden, wobei gleichzeitig der Stromrichter wegen geringerer Verluste effizienter wird. Dies wirkt sich dann auch positiv auf die Betriebskosten des Stromrichters aus. Mit anderen Worten wird die Verwendung von kostengünstigen und verlustärmeren Folienkondensatoren durch die Anwendung des Verfahrens möglich.

Bei einer weiteren vorteilhaften Ausgestaltung der Erfindung ist die Nennspannung des steuerbaren Stromrichters kleiner oder gleich 1000 V, insbesondere gleich 400V. Diese Klasse von Stromrichtern wird auch als Niederspannung oder LowVoltage bezeichnet. Aufgrund der vorhandenen, im Vergleich zu Mittelspannungsanwendungen deutlich größeren Kapazitäten sowie deutlich größeren Netz- bzw. Motorinduktivitäten liegen Resonanzerscheinungen bereits in einem Frequenzbereich zwischen 100Hz und 300Hz vor, während sie bei Mittelspannungsanwendungen deutlich darüber liegen. Erschwerend kommt hinzu, dass gerade auch die Anregungen bei Niederspannungsanwendungen besonders hoch sind und Resonanzeffekte auslösen können. Das macht die Anwendung von Folienkondensatoren gerade für Niederspannungsanwendungen bisher schwierig, wenn nicht sogar unmöglich, zumindest ohne weitere Maßnahmen wie eine verlustbehaftete Dämpfung vorzusehen. Durch die Anwendung des Verfahrens hingegen lassen sich nun auch Niederspannungsanwendungen, insbesondere Stromrichter mit einer Nennspannung von 400V, zuverlässig und verlustarm mit Folienkondensatoren betreiben.

Bei einer weiteren vorteilhaften Ausgestaltung der Erfindung ist der steuerbare Stromrichter mit einem Motor verbunden, wobei der zusätzliche Leistungsanteil in Form eines pulsierenden Zusatzmomentes mittels des steuerbaren Stromrichters an den Motor übertragen wird. Eine besonders positive Anwendung des Verfahrens ergibt sich bei einem elektrischen Antriebssystem, das einen Motor umfasst. Dabei wird der Motor mittels des Stromrichters mit elektrischer Energie versorgt und kann dabei derart gesteuert oder geregelt werden, dass der zusätzliche Leistungsanteil in Form eines Zusatzmomentes auf den Motor übertragen wird. Das durch den zusätzlichen Leistungsanteil übertragene Zusatzmoment ist im Vergleich zum gewünschten Moment am Motor derart klein, dass der Stromrichter diesen zusätzlichen Leistungsanteil als Drehmoment an den Motor übertragen kann, ohne im Betrieb nennenswerte Nachteile zu erzeugen. Damit kann die Zwischenkreisspannung auf einfache Weise geglättet werden, während sich das Verhalten des elektrischen Antriebssystems nicht merklich verschlechtert. Darüber hinaus sind aufgrund des Verzichts auf Widerstände keine erhöhten Verluste im Motor zu verzeichnen, so dass das elektrische Antriebssystem einen hohen Wirkungsgrad und geringe Betriebskosten aufweist.

Bei einer weiteren vorteilhaften Ausgestaltung der Erfindung ist der steuerbare Stromrichter mit einem Energieversorgungsnetz verbunden, wobei der zusätzliche Leistungsanteil mittels des steuerbaren Stromrichters an das Energieversorgungsnetz übertragen wird. Falls für die Versorgung des Zwischenkreises ein steuerbarer Stromrichter verwendet wird, kann dieser für das Abführen des zusätzlichen Leistungsanteils an das Energieversorgungsnetz genutzt werden. Somit übernimmt dieser aktive Netzstromrichters auch diese dämpfende Funktion und speist einen geeigneten Zusatzstrom ins Energieversorgungsnetz zurück, um den anregenden Strom zu minimieren. Auch hier ist der Zusatzstrom derart klein, dass ein Betrieb des Stromrichters und daran angeschlossenen Komponenten sowie das Energieversorgungsnetz nicht unzulässig beeinträchtigt wird.

Sofern zwei steuerbare Stromrichter vorhanden sind, ein erster steuerbarer Stromrichter zwischen dem Energieversorgungsnetz und dem Zwischenkreis und ein zweiter steuerbare Stromrichter zwischen dem Zwischenkreis und dem Motor, können beide dieser Stromrichter für die Dämpfung von Zwischenkreisspannungsschwankungen herangezogen werden. Damit werden Auswirkungen auf Energieversorgungsnetz sowie Motor gegenüber einer Anwendung mit nur einem steuerbaren Stromrichter weiter reduziert. Die Aufteilung kann dabei beispielsweise aufgrund von geltenden Vorschriften für den Anschluss an das Energieversorgungsnetz oder aus Anforderungen an das Verhalten der Last vorgenommen werden.

Bei einer weiteren vorteilhaften Ausgestaltung der Erfindung wird der zusätzliche Leistungsanteil nur dann übertragen, wenn eine periodische Schwingung der Zwischenkreisspannung erkannt wird und diese periodische Schwingung in einem vorgegebenen Frequenzbereich liegt. Man kann die Schwingungen dahingehend bewerten, ob sie für die Regelung/Steuerung problematisch sind, beispielsweise, da sie als Resonanzstelle eine nur geringe Dämpfung aufweisen, und/oder das Verhalten des Stromrichters nicht oder nur unwesentlich beeinflussen. Für Schwingungen, die den steuerbaren Stromrichter nicht oder nur unwesentlich beeinflussen, kann auf das Beseitigen der Schwingungen verzichtet werden. Die Stellreserve des Reglers bzw. der Steuerung wird dann ausschließlich für die eigentliche Aufgabe, wie beispielsweise die Steuerung eines Antriebssystems bzgl. Drehzahl oder Drehmoment, und auf die störenden Schwingungen im Antriebssystem fokussiert werden. Dies erlaubt, schnell auf störende Schwingungen reagieren zu können, da sie in einem begrenzten Frequenzbereich einfacher und schneller erkannt werden können. Die Regelung wird dadurch besonders stabil und verleiht dem Antriebssystem eine hohe Robustheit und Zuverlässigkeit gegenüber Störungen von außen.

Bei einer weiteren vorteilhaften Ausgestaltung der Erfindung ist der steuerbare Stromrichter Teil eines Antriebssystem, wobei das Antriebssystem ein Energieversorgungsnetz, insbesondere das oben genannte Energieversorgungsnetz, und/oder einen Motor, insbesondere den oben genannten, aufweist, wobei der vorgegebene Frequenzbereich eine Resonanzfrequenz aus Zwischenkreiskondensator und Netzimpedanz des Energieversorgungsnetz und/oder aus Zwischenkreiskondensator und Motorinduktivität des Motors umfasst. In vielen Antriebssystemen treten aufgrund der vorhandenen Netzinduktivitäten, der Motorinduktivitäten und der für den Betrieb des steuerbaren Stromrichters erforderlichen Kapazität des Zwischenkreiskondensators Resonanzerscheinungen, insbesondere in einem Frequenzbereich zwischen 100Hz und 300Hz auf. Diese lassen sich durch das Verfahren auf besonders einfache Weise dämpfen. Dabei hat es sich gezeigt, dass die für den Betrieb von Antrieben zulässigen Netzrückwirkungen durch das Verfahren nicht überschritten werden. Gleichzeitig wirkt sich auch das Zusatzmoment, das sich durch das Verfahren ergibt, wenn der steuerbare Stromrichter den Motor mit Energie speist, nicht störend für die Antriebsaufgabe des Motors aus. Daher ist gerade die Verwendung des Verfahrens für einen elektrischen Antrieb, der einen steuerbaren Stromrichter für die Verbindung mit einem Energieversorgungsnetzes und/oder einen Stromrichter für die Verbindung des Zwischenkreises mit einem Motor vorsieht, besonders vorteilhaft. Es lässt sich damit ein kostengünstiger Antrieb mit einem oder mehreren Folienkondensatoren anstelle von Elektrolytkondensatoren aufbauen und, wie oben bereits beschrieben, kostengünstig betreiben.

Bei einer weiteren vorteilhaften Ausgestaltung der Erfindung wird zur Erkennung der periodischen Schwingung der Zwischenkreisspannung die Zwischenkreisspannung am Zwischenkreiskondensator und/oder der Strom durch den Zwischenkreiskondensator gemessen. Die Erkennung einer Schwingung kann auf unterschiedliche Weise erfolgen. Auf einfache Weise kann die Spannung am Zwischenkreiskondensator gemessen werden. Alternativ oder ergänzend kann auch der Strom durch den Zwischenkreiskondensator gemessen werden und daraus die Spannung am Zwischenkreiskondensator bestimmt werden. Darüber hinaus ist es alternativ oder ergänzend auch möglich, aus Kenntnis des Stromrichterverhaltens und anderen Messgrößen wie beispielsweise einer Netzspannung und/oder Netzströmen des Energieversorgungsnetzes oder auch aus Motorströmen die Spannung am Zwischenkreiskondensator rechnerisch, insbesondere auf Basis eines Rechenmodells, zu bestimmen und damit Schwingungen zu erkennen.

Mit anderen Worten kann anstelle der Zwischenkreis-Spannungsmessung auch der Strom in den Kondensator oder der Strom des Stromrichters, der für die Verbindung mit dem Energieversorgungsnetz oder mit dem Motor vorgesehen ist, als Eingangsgröße für das Filter oder den Regler verwendet werden.

Bei einer weiteren vorteilhaften Ausgestaltung der Erfindung werden die Messwerte der Zwischenkreisspannung und/oder des Stroms durch den Zwischenkreiskondensator gefiltert. Damit kann auf einfache Weise das Verfahren auf bestimmte Frequenzbereiche eingeschränkt werden. Darüber hinaus ist es gerade bei der Verwendung in einem elektrischen Antriebssystem besonders vorteilhaft, Schwingungen, die aufgrund eines ungesteuerten Stromrichters wie beispielsweise einer B2-Diodenbrücke oder B6-Diodenbrücke entstehen, bei der Beseitigung von Schwingungen nicht zu berücksichtigen, da sie prinzipbedingt vorhanden und tolerierbar sind. Eine Beseitigung würde eine zu große Regelreserve des steuerbaren Stromrichters erfordern. Da gleichzeitig durch den ungesteuerten Stromrichter das Antriebssystem besonders kostengünstig herstellbar ist, kann die Kombination von steuerbaren und ungesteuerten Stromrichter in einem Antrieb mit einem Verfahren zur Beseitigung von Schwingungen außerhalb der doppelten oder 6-fachen Netzfrequenz und deren Vielfachen, wie sie bei der Verwendung von Diodenbrücken entstehen, ein besonders gutes, kostengünstiges und zuverlässiges Antriebssystem hergestellt werden.

Die Folgenden wird die Erfindung anhand der in den Figuren dargestellten Ausführungsbeispiele näher beschrieben und erläutert. Es zeigen:

FIG 1          einen Stromrichter mit Spannungszwischenkreis,
FIG 2 und 3    jeweils ein elektrisches Antriebssystem,
FIG 4          ein Regelungsdiagramm und
FIG 5          den Ausschnitt einer Wirkstromregelung.

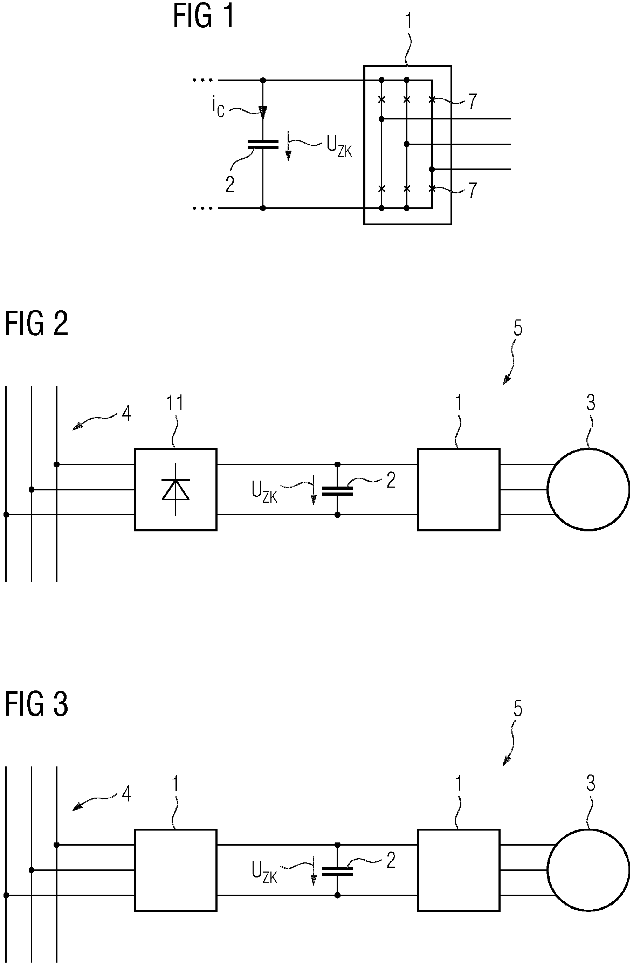

Die FIG 1 zeigt einen steuerbaren Stromrichter 1 mit einem Zwischenkreiskondensator 2. Der steuerbare Stromrichter 1 wandelt dabei eine Spannung $U_{ZK}$, die am Zwischenkreiskondensator 2 anliegt, in eine Wechselspannung um, die an den drei Ausgängen des steuerbaren Stromrichters 1 anliegt. Dazu verwendet der steuerbare Stromrichter 1 Halbleiter 7, die entsprechend geschaltet werden. Durch den Zwischenkreiskondensator 2 fließt der Kondensatorstrom $i_C$.

Je nach eingestellten Spannungen wird eine Leistung über den Stromrichter 1 übertragen. Dabei kann zu der für den Betrieb gewünschten Leistung, die beispielsweise ein Moment an einem hier nicht dargestellten Motor bewirkt, ein zusätzlicher Leistungsanteil übertragen werden, der einen Strom $i_C$ durch den Zwischenkreiskondensator 2 verursacht und eine dort vorhandene Schwankung in der Zwischenkreisspannung $U_{ZK}$ entgegenwirkt.

Die FIG 2 zeigt als eine typische Anwendung für einen steuerbaren Stromrichters 1 ein Antriebssystem 5. Der Zwischenkreis mit seinem Zwischenkreiskondensator 2 wird dabei über einen Diodengleichrichter 11, auch als Diodenbrücke bezeichnet, aus einem Energieversorgungsnetz 4 mit Energie versorgt. Diese Energie wird weiter über den steuerbaren Stromrichter 1 an einen dort angeschlossenen Motor 3 übertragen. Mit Hilfe des steuerbaren Stromrichters 1 ist das Verhalten des Motors 3, insbesondere in Hinblick auf sein Moment oder Drehzahl, steuer- oder regelbar. Mit Hilfe des steuerbaren Stromrichters 1 können Schwankungen in der Zwischenkreisspannung $U_{ZK}$ beseitigt werden, indem ein zusätzlicher Leistungsanteil $P_{add}$ an den Motor 3 übertragen wird. Dieser zusätzliche Leistungsanteil $P_{add}$ bewirkt dann im Motor 3 ein zusätzliches Moment. Für eine genauere Beschreibung des steuerbaren Stromrichters wird auf die Beschreibung zur FIG 1 und die dort eingeführten Bezugszeichen verwiesen.

Die FIG 3 zeigt ein weiteres Ausführungsbeispiel eines Antriebssystems 5. Zur Vermeidung von Wiederholungen wird auf die Beschreibung zur FIG 2 sowie auf die dort eingeführten Bezugzeichen verwiesen. Im Gegensatz zum vorhergehenden Ausführungsbeispiel ist hier anstelle des Diodengleichrichters 11 ein weiterer steuerbarer Stromrichter 1 angeordnet. Mit den nun vorhandenen zwei steuerbaren Stromrichtern 1 kann nun die Dämpfung der Zwischenkreisspannung $U_{ZK}$ durch beide Stromrichter 1 vorgenommen werden. Dies bewirkt dann je nach Aufteilung auf die beiden Stromrichter 1 Ströme in das Energieversorgungsnetz und ein Zusatzmoment im Motor.

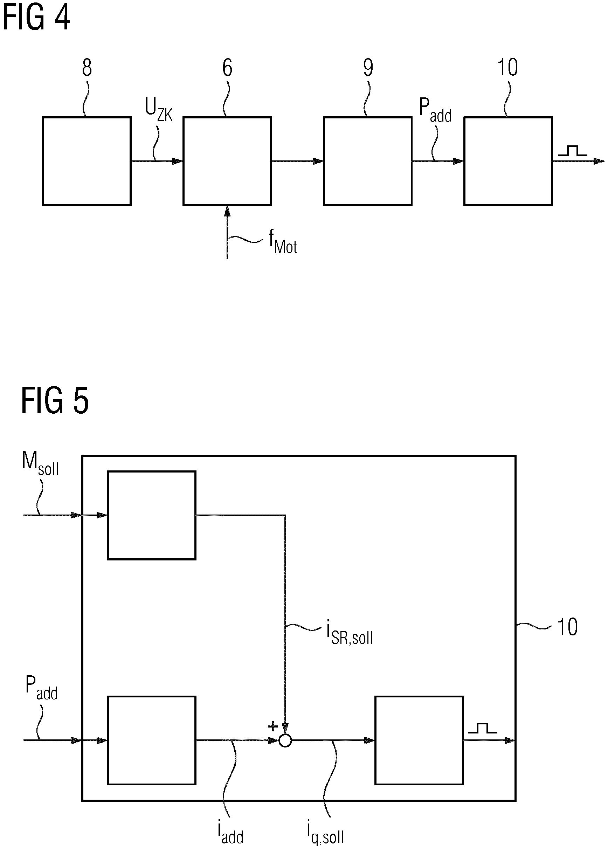

Die FIG 4 zeigt ein vereinfachtes Regelungsdiagramm zur Durchführung des Verfahrens. Ausgehend von einer Spannungserfassung 8 wird der Wert der Zwischenkreisspannung $U_{ZK}$ an ein Filter 6 übertragen. Das Filter 6 kann dabei die Zwischenkreisspannung $U_{ZK}$ nur in bestimmten Frequenzbereichen übertragen oder spezielle Frequenzen herausfiltern, um das Verhalten des Verfahrens zum Beseitigen von Spannungsschwankungen zu verbessern. Die Frequenzen können dabei fest vorgegeben werden oder sich in Abhängigkeit von der Motorfrequenz ergeben.

Bei diesem Filter 6 handelt es sich um einen optionalen Bestandteil der Regelung, auf die durchaus verzichtet werden kann, wenn die Dämpfung der Zwischenkreisspannung $U_{ZK}$ breitbandig erfolgen soll. Verzichtet man auf das Filter 6, so kann die Motorfrequenz $f_{Mot}$, wie auch die Zwischenkreisspannung $U_{ZK}$ direkt dem Regler 9 zugeführt werden. Der Regler 9 bestimmt aus dem Wert der Zwischenkreisspannung $U_{ZK}$, direkt oder aus dem gefilterten Signal, den zusätzlichen Leistungsanteil $P_{add}$ der vom steuerbaren Stromrichter 1 zur Reduzierung oder Beseitigung der Spannungsschwankung am Zwischenkreiskondensator 2 zu übertragen ist. Die Stromrichterregelung 10 wandelt diese Information wieder in Schaltimpulse für die Halbleiter 7 um. Dabei können die Aufgaben des Reglers 9 und die der Stromrichterregelung 10 in einer Hardwarebaugruppe für die Regelung des Stromrichters 1 vereinigt werden.

Teile der Stromrichterregelung 10 zur Regelung der Wirkkomponenten des Stromes durch den steuerbaren Stromrichter 1 zeigt FIG 5. Sowohl das Sollmoment für den Motor 3 des Antriebssystems 5 als auch der zusätzliche Leistungsanteil $P_{add}$ wird in jeweilige Stromkomponenten $i_{add}$, $i_{SR,soll}$ umgerechnet. Diese Stromkomponenten werden addiert und ergeben den Sollwert für den Wirkstrom $i_{q,soll}$ innerhalb der Stromrichterregelung 10. Die Wirkstromregelung wird dann in bekannter Weise in Steuerimpulse für die Halbleiter 7 des steuerbaren Stromrichters 1 umgesetzt.

Zusammenfassend betrifft die Erfindung ein Verfahren zum Betreiben eines steuerbaren Stromrichters mit einem Zwischenkreiskondensator. Zur Verbesserung des steuerbaren Stromrichters, insbesondere im Hinblick auf sein Regelverhalten, wird vorgeschlagen, dass in Abhängigkeit einer am Zwischenkreiskondensator anliegenden Zwischenkreisspannung ein zusätzlicher Leistungsanteil über den steuerbaren Stromrichter derart übertragen wird, dass der für den zusätzlich Leistungsanteil entstehende elektrische Strom durch den steuerbaren Stromrichter einer Schwingung der Zwischenkreisspannung entgegenwirkt. Ferner betrifft die Erfindung einen steuerbaren Stromrichter mit einer Regelungseinheit zur Durchführung eines derartigen Verfahrens, wobei der steuerbare Stromrichter abschaltbare Halbleiter und einen Zwischenkreiskondensator aufweist, wobei der Zwischenkreiskondensator als Folienkondensator ausgebildet ist.

**Patentansprüche**

1. Verfahren zum Betreiben eines steuerbaren Stromrichters (1) mit einem Zwischenkreiskondensator (2), wobei in Abhängigkeit einer am Zwischenkreiskondensator (2) anliegenden Zwischenkreisspannung ($U_{ZK}$) ein zusätzlicher Leistungsanteil ($P_{add}$) über den steuerbaren Stromrichter (1) derart übertragen wird, dass der für den zusätzlich Leistungsanteil entstehende elektrische Strom durch den steuerbaren Stromrichter (1) einer Schwingung der Zwischenkreisspannung ($U_{ZK}$) entgegenwirkt.

2. Verfahren nach Anspruch 1, wobei der Zwischenkreiskondensator (2) als Folienkondensator ausgebildet ist.

3. Verfahren nach einem der Ansprüche 1 oder 2, wobei die Nennspannung des steuerbaren Stromrichters (1) kleiner oder gleich 1000 V, insbesondere gleich 400V, ist.

4. Verfahren nach einem der Ansprüche 1 bis 3, wobei der steuerbare Stromrichter (1) mit einem Motor (3) verbunden ist, wobei der zusätzliche Leistungsanteil ($P_{add}$) in Form eines pulsierenden Zusatzmomentes mittels des steuerbaren Stromrichters (1) an den Motor (3) übertragen wird.

5. Verfahren nach einem der Ansprüche 1 bis 3, wobei der steuerbare Stromrichter (1) mit einem Energieversorgungsnetz (4) verbunden ist, wobei der zusätzliche Leistungsanteil ($P_{add}$) mittels des steuerbaren Stromrichters (1) an das Energieversorgungsnetz (4) übertragen wird.

6. Verfahren nach einem der Ansprüche 1 bis 5, wobei der zusätzliche Leistungsanteil ($P_{add}$) nur dann übertragen wird, wenn eine periodische Schwingung der Zwischenkreisspannung ($U_{ZK}$) erkannt wird und diese periodische Schwingung in einem vorgegebenen Frequenzbereich liegt.

7. Verfahren nach Anspruch 6, wobei der steuerbare Stromrichter (1) Teil eines Antriebssystem (5) ist, wobei das Antriebssystem (5) ein Energieversorgungsnetz (4), insbesondere das Energieversorgungsnetz (4) gemäß Anspruch 5, und/oder einen Motor (3), insbesondere den Motor (3) gemäß Anspruch 4, aufweist, wobei der vorgegebene Frequenzbereich eine Resonanzfrequenz aus Zwischenkreiskondensator (2) und Netzimpedanz des Energieversorgungsnetz (4) und/oder aus Zwischenkreiskondensator (2) und Motorinduktivität des Motors (3) umfasst.

8. Verfahren nach einem der Ansprüche 6 oder 7, wobei zur Erkennung der periodischen Schwingung der Zwischenkreisspannung ($U_{ZK}$) die Zwischenkreisspannung ($U_{ZK}$) am Zwischenkreiskondensator (2) und/oder der Strom ($i_C$) durch den Zwischenkreiskondensator (2) gemessen wird.

9. Verfahren nach Anspruch 8, wobei die Messwerte der Zwischenkreisspannung ($U_{ZK}$) und/oder des Stroms ($i_C$) durch den Zwischenkreiskondensator (2) gefiltert werden.

10. Steuerbarer Stromrichter (1) mit einer Regelungseinheit eingerichtet zur Durchführung eines Verfahrens nach einem der Ansprüche 1 bis 9, wobei der steuerbare Stromrichter (1) abschaltbare Halbleiter und einen Zwischenkreiskondensator (2) aufweist, **dadurch gekennzeichnet, dass** der Zwischenkreiskondensator (2) als Folienkondensator ausgebildet ist.

FIG 1

$i_C$

$U_{ZK}$

2

1

7

7

FIG 2

4

11

5

1

3

$U_{ZK}$

2

FIG 3

4

1

5

1

3

$U_{ZK}$

2

FIG 4

$U_{ZK}$

$P_{add}$

8 6 9 10

$f_{Mot}$

FIG 5

$M_{soll}$

$P_{add}$

$i_{SR,soll}$

$+$

$i_{add}$ $i_{q,soll}$

10

**Europäisches Patentamt**
**European Patent Office**
**Office européen des brevets**

# EUROPÄISCHER RECHERCHENBERICHT

Nummer der Anmeldung

EP 19 20 0073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 667 503 A1 (DAIKIN IND LTD [JP]) 27. November 2013 (2013-11-27) <br> * Abbildungen 2,5 * <br> * Absatz [0022] - Absatz [0027] * <br> * Absatz [0042] * <br> ----- | 1-10 | INV. <br> H02M1/15 |
| X | CASCONE V ET AL: "DESIGN OF ACTIVE FILTERS FOR DYNAMIC DAMPING OF HARMONIC CURRENTS GENERATED BY ASYNCHRONOUS DRIVES IN MODERN HIGH POWER LOCOMOTIVES", PROCEEDINGS OF THE ANNUAL POWER ELECTRONICS SPECIALISTS CONFERENCE (PESC). TOLEDO, JUNE 29 - JULY 3, 1992; [PROCEEDINGS OF THE ANNUAL POWER ELECTRONICS SPECIALISTS CONFERENCE (PESC)], NEW YORK, IEEE, US, Bd. 1, 29. Juni 1992 (1992-06-29), Seiten 404-410, XP000369055, DOI: 10.1109/PESC.1992.254852 ISBN: 978-0-7803-0695-0 <br> * Abbildung 3 * <br> * Kapitel "Active filtering techniques" * <br> ----- | 1 | |
| X | WO 2019/179621 A1 (BOSCH GMBH ROBERT [DE]) 26. September 2019 (2019-09-26) <br> * Abbildung 7 * <br> * Absätze [0034], [0057] * <br> ----- | 1 | RECHERCHIERTE SACHGEBIETE (IPC) <br><br> H02M <br> H02P |
| X | US 2018/331645 A1 (AOKI YASUAKI [JP] ET AL) 15. November 2018 (2018-11-15) <br> * Abbildung 1 * <br> * Absatz [0008] * <br> ----- | 1 | |
| X | US 2014/247003 A1 (YAMASAKI HISANORI [JP] ET AL) 4. September 2014 (2014-09-04) <br> * Abbildung 1 * <br> * Absatz [0051] * <br> ----- <br> -/-- | 1 | |

Der vorliegende Recherchenbericht wurde für alle Patentansprüche erstellt

| Recherchenort | Abschlußdatum der Recherche | Prüfer |
|---|---|---|
| Den Haag | 2. April 2020 | Gotzig, Bernhard |

Seite 1 von 2

| Europäisches Patentamt / European Patent Office / Office européen des brevets | **EUROPÄISCHER RECHERCHENBERICHT** | **Nummer der Anmeldung** EP 19 20 0073 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 482 442 A1 (EBM PAPST MULFINGEN GMBH & CO [DE]) 1. August 2012 (2012-08-01) * Abbildung 1 * * Absatz [0025] * ----- | 1 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 2. April 2020 | Gotzig, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 0073

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2020

| Im Recherchenbericht angeführtes Patentdokument | Datum der Veröffentlichung | Mitglied(er) der Patentfamilie | Datum der Veröffentlichung |
|---|---|---|---|
| EP 2667503 A1 | 27-11-2013 | CN 103329413 A<br>EP 2667503 A1<br>JP 5288009 B2<br>JP 2012165634 A<br>US 2013300334 A1<br>WO 2012098875 A1 | 25-09-2013<br>27-11-2013<br>11-09-2013<br>30-08-2012<br>14-11-2013<br>26-07-2012 |
| WO 2019179621 A1 | 26-09-2019 | KEINE | |
| US 2018331645 A1 | 15-11-2018 | DE 102018111293 A1<br>JP 2018196179 A<br>US 2018331645 A1 | 15-11-2018<br>06-12-2018<br>15-11-2018 |
| US 2014247003 A1 | 04-09-2014 | CN 103931098 A<br>JP 5156149 B1<br>JP WO2013108374 A1<br>US 2014247003 A1<br>WO 2013108374 A1 | 16-07-2014<br>06-03-2013<br>11-05-2015<br>04-09-2014<br>25-07-2013 |
| EP 2482442 A1 | 01-08-2012 | CN 102624302 A<br>EP 2482442 A1<br>ES 2472945 T3<br>US 2012194110 A1 | 01-08-2012<br>01-08-2012<br>03-07-2014<br>02-08-2012 |

EPO FORM P0461

Für nähere Einzelheiten zu diesem Anhang : siehe Amtsblatt des Europäischen Patentamts, Nr.12/82